# EUROPEAN PATENT APPLICATION

(11) **EP 4 510 110 A1**
(43) Date of publication of application: **19.02.2025**
(21) Application number: 24195019.5
(22) Date of filing: 16.08.2024
(51) Int. Cl.: G09B 21/00

(54) **TACTILE PINS WITH OVERLOAD PROTECTION FEATURES**

(30) Priority: 17.08.2023 US 202318235158
(71) Applicant: Freedom Scientific, Inc., Clearwater, FL 33764 (US)
(72) Inventor: MURPHY, Patrick, Florida (US); CONRAD, Todd, Florida (US); TUJIL, Walter van, Rotterdam (NL); ALVIES, Katelyn, Florida (US); GEROLSTEIN, Eric, Florida (US)
(74) Representative: Dennemeyer & Associates S.A.

(57) **Abstract**

Disclosed are overload protection pins ("OP Pins") for use in a Braille display. Each OP Pin in the display is placed above an associated actuator pin, which allows the OP Pins to be selectively driven upwardly or downwardly. This, in turn, allows the OP Pins to be selectively positioned to generate Braille characters that can be sensed by a BLV user. However, when excessive forces are encountered (defined as forces beyond the standard sensing pressures applied by BLV users) the OP Pins yield and are retracted to a position beneath the upper surface of the Braille display. This serves both to protect both the OP Pins and the underlying actuator mechanisms. Once the excessive force is removed, the OP Pin recovers to its original height.

## Description

### TECHNICAL FIELD

This disclosure relates to tactile pins for use in Braille displays. More particularly, the present disclosure relates to tactile pins with features for reducing damage to the pin and the associated display upon application of excessive forces.

### BACKGROUND OF THE INVENTION

Braille displays are used by individuals who are blind or who otherwise suffer from low vision (hereinafter "BLV users"). Braille displays include a series of pins that can be selectively raised or lowered to generate refreshable Braille characters. These pins, sometimes referred to as tactile pins or dot pins, are designed to be sensed by the fingertips of the BLV user. Tactile pins are delicate and susceptible to damage. Even minor damage to tactile pins can be perceived by BLV users as static or noise when reading the display. Significant damage to tactile pins can result in the BLV user being unable to read the Braille characters being displayed. Unfortunately, many tactile pin designs are easily damaged upon the application of excessive forces. This damage is often unintentional, such as when a Braille display is dropped by the user. In other cases, destructive forces are intentional, such as when publicly accessible Braille displays are vandalized.

Vandalism can occur, for example, when Braille displays are incorporated into public kiosks. These kiosks can be found in locations where BLV users need to read or input data, such as vending machines, informational kiosks, or reservation terminals. The public nature of these displays and the vulnerable nature of existing pin designs results in these displays being at a distinct risk of being damaged and rendered unusable. There are many ways that a Braille or tactile display element can be damaged. For example, various lateral, normal, or shear forces applied to the pin can be transferred to and damage the underlying actuator. Even if the underlying actuator is not damaged, the pin itself can be rendered unusable.

As a result of this, some public kiosks must pass certain safety standards. Under one standard, known as the ball impact test, a 50mm 500g steel ball is dropped onto the surface of the Braille display. This safety standard does not require the display to retain its functionality, only that it does not pose a safety risk to BLV users following the impact. Thus, there exists a real need in the industry for a higher standard, whereby a Braille display can retrain its functionality following significant impacts and excessive forces.

Although little, if any, effort has been directed to protecting tactile pins, efforts have been made to protect various push button devices from damage. One such example is illustrated in U.S. Pat. 6,765,164 to Lee et al. Lee discloses a push button design that resists damage upon the application of excessive external forces. The button includes first and second springs that can be elastically compressed upon the application of excessive forces. In this manner, switch components are protected from being damaged or broken. Similarly, U.S. Pat. 4,053,726 to Schaad discloses a push-button electrical switch. The push-button switch is slidable in an opening in a casing and into a position wherein the push-button is flush with the casing. In this way, the force on a fixed contact means cannot exceed the force developed by associated springs, thereby reducing the possibility of damage to the button.

Although the referenced pushbuttons offer some level of damage protection, they are used for totally different applications and are not concerned with the unique challenges presented by tactile pins and Braille displays. Nor do the referenced push buttons include means for protecting the underlying actuator mechanisms associated with a Braille display. The tactile pins of the present disclosure are aimed at overcoming these, and other shortcomings known in the background art.

### SUMMARY OF THE INVENTION

It is therefore the object of this disclosure to provide a tactile pin design with various overload protection features.

The disclosed overload protection pins provide several important advantages. For example, they allow excessive forces to be distributed so that they do not damage the underlying actuator mechanisms.

A further possible advantage is achieved by positioning the overload protection pins beneath the associated Braille display upon the application of excessive forces, thereby ensuring that the pins do not become damaged or unusable.

Still yet another possible advantage of the present system is to provide a Braille display that can withstand the forces that may be encountered by a publicly available kiosk.

These and other advantages are realized by incorporating an overload protection pin ("OP Pin") into a Braille display. Each OP Pin in the display is placed above an associated actuator pin. This allows the OP Pins to be selectively driven upwardly or downwardly by associated actuator pins. As such, the OP Pins can be positioned in a manner to generate Braille characters that can be tactilely sensed by the BLV user. However, when excessive forces beyond the standard tactile sensing pressures are applied to the OP Pin, it yields, reducing its overall height to become lower than the upper surface of the surrounding Braille display. This serves both to protect the OP Pins as well as the underlying actuator mechanisms. Once the excessive force is removed, the OP Pin recovers to its original height. There are a variety of means by which the OP Pin can be positioned below the surface of the Braille display upon encountering excessive forces. Examples of these means include but are not limited to: spring-loaded pins; buckle spring pins; plastic spring pins; and compressible foam pins.

Various embodiments of the invention may have none, some, or all of these advantages. Other technical advantages of the present invention will be readily apparent to one skilled in the art.

### BRIEF DESCRIPTION OF THE DRAWINGS

For a more complete understanding of the present disclosure and its advantages, reference is now made to the following descriptions, taken in conjunction with the accompanying drawings, in which:
FIG. 1 is an isometric view of a Braille kiosk with tactile pins employing the overload protection features of the present disclosure.
FIGS. 2A-2B disclose a first embodiment of the tactile pins with overload protection features.
FIGS. 3A-3B disclose a second embodiment of the tactile pins with overload protection features.
FIGS. 4A-4B disclose a third embodiment of the tactile pins with overload protection features.
FIGS. 5A-5B disclose a fourth embodiment of the tactile pins with overload protection features.
FIGS. 6A-6B disclose a fifth embodiment of the tactile pins with overload protection features.
Similar reference numerals are used to refer to the same or similar elements throughout the several views of the drawings.

### DETAILED DESCRIPTION OF THE DRAWINGS

This disclosure relates to various overload protection pins ("OP Pins") that can be employed in a Braille display. The OP Pins include features to prevent or minimize damage upon the application of excessive forces. Each OP Pin is placed above an associated actuator pin, which allows the OP Pin to be selectively driven upwardly or downwardly. This, in turn, allows the OP Pins to selectively generate Braille characters that can be sensed by a BLV user. However, when excessive forces are encountered the OP Pins yield and are retracted to a position beneath the upper surface of the Braille display. This serves to protect both the OP Pins and the underlying actuator mechanisms. Once the excessive force is removed, the OP Pins recover to their original height and can once again be used as conventional tactile pins. The present disclosure describes various means for providing overload protection to the OP Pins. The various features of the present disclosure, and the manner in which they interrelate, are described in greater detail hereinafter.

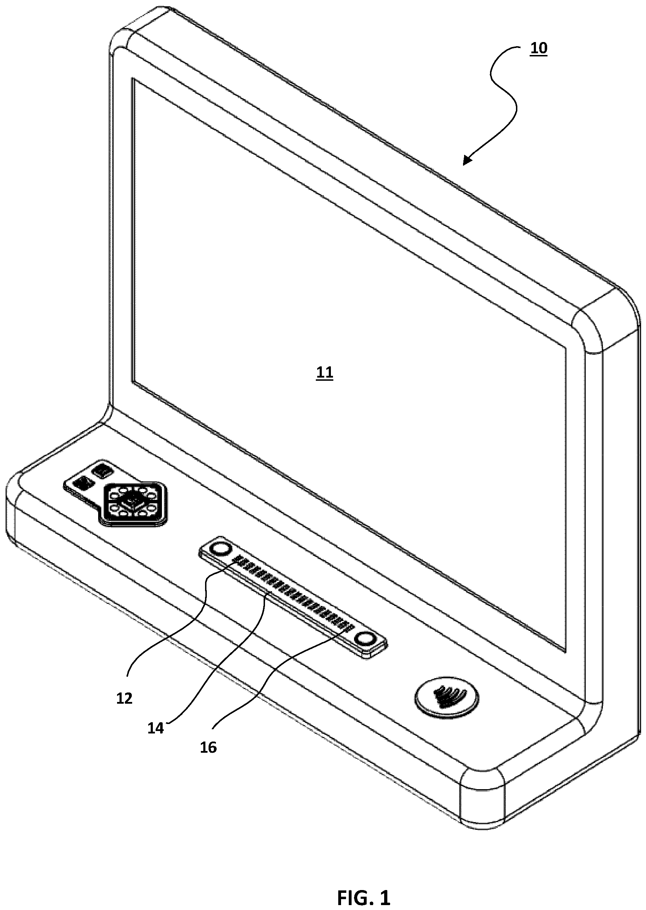

FIG. 1 depicts a Braille kiosk 10 in accordance with the present disclosure. Although the depicted display 10 is a Braille kiosk, the present disclosure can readily be used in connection with any of a wide variety of Braille displays such as, for example, portable displays and tablets. Display 10 includes a screen 11 and an upper surface 14 for mounting various user controls. Upper surface 14 houses a centrally located refreshable Braille display with an array of tactile pins that form a row of Braille characters. The individual Braille characters 16 can be formed from six or eight dot characters as is known in the art. The top surface of each Pin 12 can be selectively positioned above the surface 14 of the display 10 to be sensed by the BLV user as a Braille character. Each of the individual pins can be an OP Pin 12 constructed in accordance with any of the embodiments disclosed herein.

### FIRST EMBODIMENT

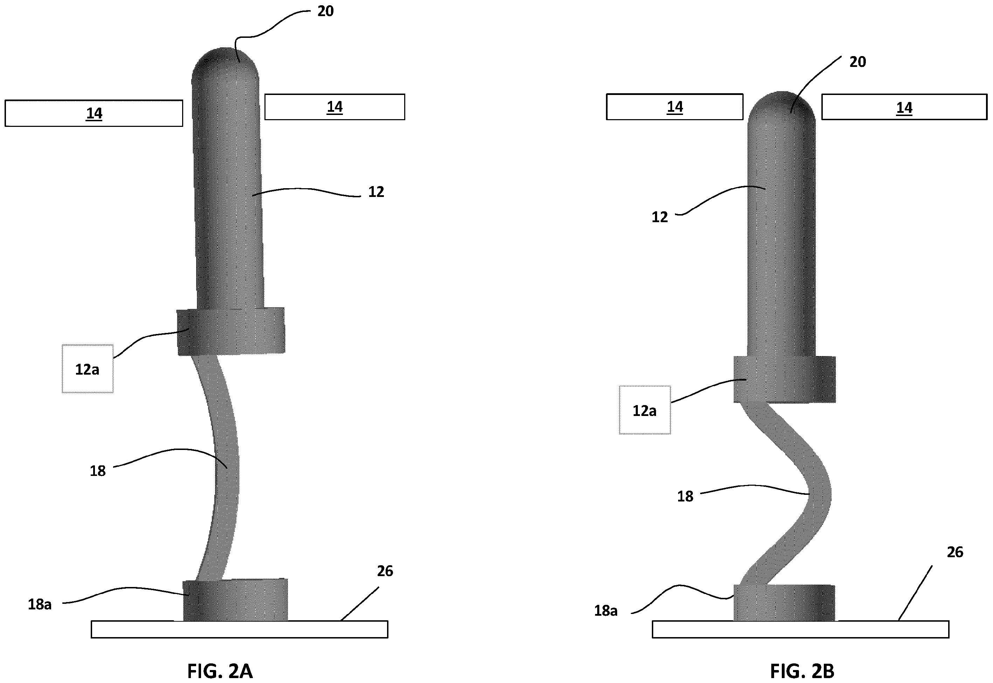

FIGS. 2A and 2B are detailed sectional views of OP Pins 12 of the first embodiment. FIG. 2A illustrates OP Pin 12 in an uncompressed state with its upper surface 20 extending above the surface 14 of display 10. FIG. 2B illustrates OP Pin 12 in a compressed state with upper surface 20 positioned below surface 14. OP 12 of this embodiment includes a beam 18 that connects the collar 12a of pin 12 with a base 18a. Base 18a, in turn, contacts the actuator mechanism 26 that drives OP Pin 12. Such actuator mechanisms are known in the art and can employ, for example, piezoelectric, magnetic, or electromagnetic drivers. The actuator mechanism 26 receives instructions for driving a series of tactile pins to thereby generate Braille characters in a refreshable manner. These known actuator mechanisms include sensitive electronics that can be damaged by excessive forces transferred from the OP Pin 12.

OP Pin 12, consisting of 12, 12a, 18, 18a, and 20, can be manufactured as a single piece of molded plastic. Regardless of the manufacturing method, the beam 18 portion of OP Pin 12 is thin enough to buckle upon the application of excessive forces. Namely, when forces beyond those applied by the fingers of a user are applied, beam 18 will buckle inwardly toward the central axis to thereby reduce the overall height of OP Pin 12. It is also within the scope of the present invention for beam 18 to buckle outwardly in the opposite direction. As used herein, an "excessive force" is defined as any force that exceeds the forces that would be applied by a BLV user in reading the Braille display, forces that would cause the bottom 18a of OP Pin 12 to impact and damage actuator mechanism 26, or forces that would otherwise damage the upper surface 20 of OP Pin 12.

This reduction in height of OP Pin 12 upon being compressed allows the upper surface 20 of pin 12 to be positioned beneath surface 14 of display (Fig. 2B). As such, any additional forces upon display 10 are encountered by surface 14 of display 10 and not the sensitive OP Pins 12. This arrangement protects the integrity of both OP Pins 12 as well as the sensitive components associated with actuator mechanism 26. The other embodiments described below discuss various alternative means for providing overload protection.

### SECOND EMBODIMENT

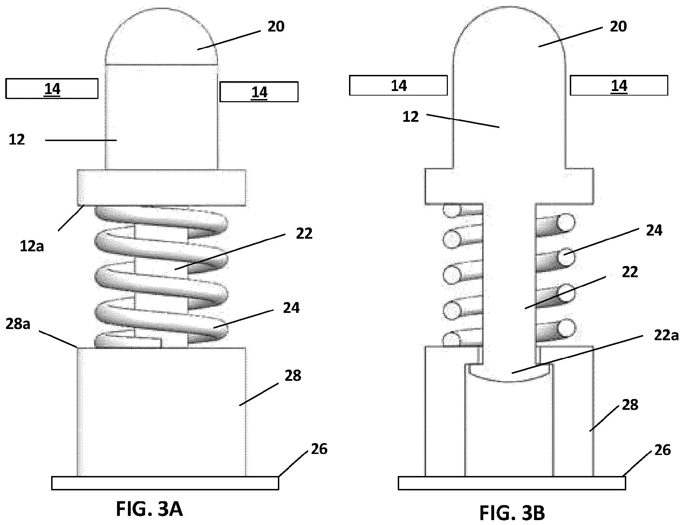

The second embodiment of the disclosure is depicted in FIGS. 3A and 3B, which are side and sectional view of one of the OP Pins 12 of display 10. This embodiment, as well as the other alternative embodiments discussed below, shares many of the same features as the primary embodiment. Thus, the same reference numerals refer to the same elements throughout the various figures. Each OP Pin 12 includes an upper surface 20 that can be sensed by the BLV user when it is extended above the surface 14 of display 10. Each OP Pin 12 also includes a central shaft 22 with a lower end 22a. A coil spring 24 is positioned about shaft 22. The lower end 22a of shaft 22 contacts the actuator mechanism 26 that is employed in selectively driving OP Pin 12 upwardly or downwardly. Actuator mechanism 26 is housed within base 28. OP Pin 12 and shaft 22 can be reciprocally moved upwardly and downwardly within base 28 by way of actuator 26.

The overload protection means of this second embodiment is provided by the coil spring 24 that is positioned about the centrally located shaft 22 and along the intermediate extent of the pin 12. This coil spring 24 extends between a lower collar 12a of OP Pin 12 and an upper surface 28a of base 28. Spring 24 functions to isolate actuator 26 from excessive forces applied to OP Pin 12. Namely, when an excessive force is applied to one or more OP Pins 12, spring 24 compresses to slow the travel of OP Pin 12 and allow upper surface 20 to extend below upper surface 14. Namely, prior to full compression of spring 24, the top portion 20 of OP Pin 12 will move down below surface 14 of display 10. The size, spring constant, and precompression of spring 24 are achieved to accomplish this objective. In this manner, spring 24 prevents any excessive forces from being transferred via shaft 22 to the underlying actuating mechanism 26, while providing adequate force for the BLV user to tactilely sense. Spring 24 reforms by uncompressing following the removal of the excessive force. This allows OP Pin 12 to reset to its initial position with the upper end 20 above the surface 14 of display 10.

### THIRD EMBODIMENT

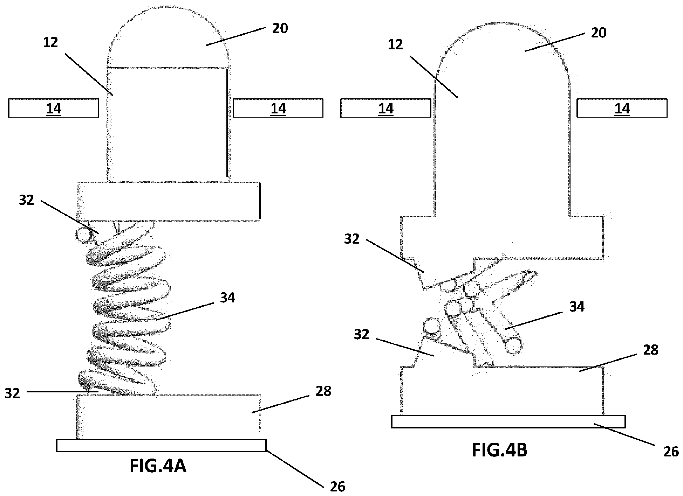

A third embodiment of the OP Pin 12 is illustrated in FIGS. 4A -4B. In this third embodiment, coil spring 24 is replaced by a buckle-spring 34. Furthermore, the central shaft 22 is replaced by upper and lower and offset mounting posts 32. Thus, the buckle-spring 34 is offset from the center axis and is connected to the OP Pin 12 via the opposing mounting posts 32. When OP Pin 12 undergoes a high enough compressive force, buckle-spring 34 will buckle towards the center axis of the OP Pin 12. This, in turn, allows the OP Pin 12 to drop below the surface 14 of the display 10 to prevent any damage to the underlying actuating mechanism 26. Buckle-spring 34 would thereafter reform following the force removal and thereby allow the OP Pin 12 to reset to its initial height above surface 14.

### FOURTH EMBODIMENT

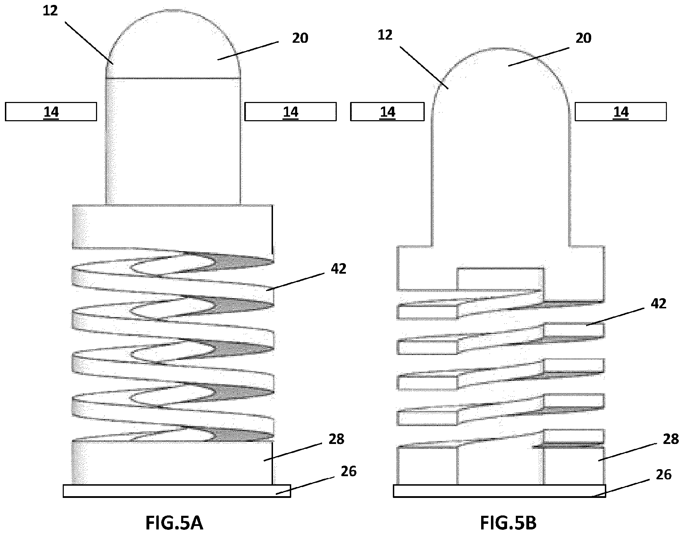

FIGS. 5A-5B depict a fourth embodiment of the disclosure. In this embodiment, the coil spring 24 is replaced by a plastic spring pin 42. There is no central shaft in this embodiment. Rather, the plastic spring pin 42 would be a single plastic part with a spring molded throughout it. When subjected to an overload force, the plastic spring pin 42 will compress down onto itself, whereby the upper end 20 of the OP Pin 12 extends beneath the upper surface 14 of display 10. The plastic spring pin 42 would then reform following the force removal allowing the plastic spring pin 42 to reset to its initial position.

### FIFTH EMBODIMENT

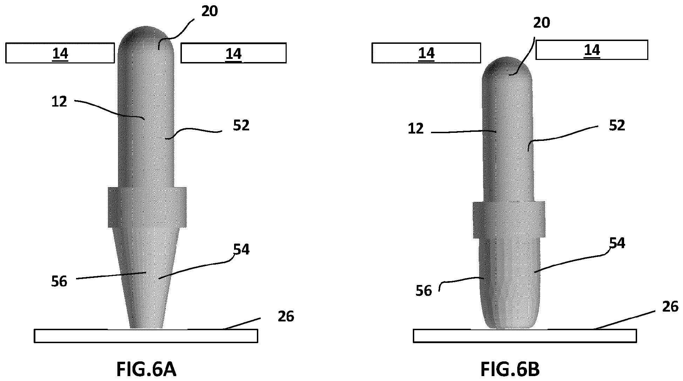

FIGS. 6A-6B relate to a multi-material OP Pin 12. Pin 12 includes an upper extent 52 formed by a hard, resilient plastic and a bottom extent 54 formed from a compressible elastomeric 56. In the depicted embodiment, the bottom extent 54 takes the form of a conical frustum in its uncompressed state (FIG. 6A). Thereafter, upon the application of excessive forces, foam 56 compresses to collapse the OP Pin 12 into itself, thereby reducing the overall height of the pin. This, in turn, positions the upper surface 20 of OP Pin 12 to a position that is beneath display surface 14. Again, this protects both OP Pin 12 and the actuator mechanism 26. After this force is removed, the elastomeric 56 will recover its original shape, driving the OP Pin 12 back to its initial position.

Although this disclosure has been described in terms of certain embodiments and generally associated methods, alterations and permutations of these embodiments and methods will be apparent to those skilled in the art. Accordingly, the above description of example embodiments does not define or constrain this disclosure. Other changes, substitutions, and alterations are also possible without departing from the spirit and scope of this disclosure.

## Claims

1. A tactile pin with overload protection features for use in a refreshable Braille display, the refreshable Braille display including an upper surface with a series of openings, the tactile pin being received within one of the series of openings, the tactile pin comprising:
an upper extent, a lower extent, and an intermediate extent therebetween, the upper extent being rounded and adapted to be perceived by the fingertips of a user;
a base for receiving the lower extent of the tactile pin, an actuator mechanism associated with the base, the actuator mechanism selectively driving the tactile pin upwardly with respect to the upper surface of the Braille display, the actuator mechanism receiving instructions for driving a series of tactile pins to selectively generate refreshable Braille characters, the actuator mechanism including sensitive components;
a coil spring positioned about the intermediate extent of the tactile pin, the coil spring having a length and a spring constant, with the length and the spring constant being selected such that the upper extent of the tactile pin is positioned beneath the upper surface of the Braille display when the spring is compressed, the length and the spring constant further selected to prevent any damage to the sensitive components upon the application of excessive forces.

2. A Braille display with overload protection features, the Braille display comprising:
an upper extent adapted to be perceived by a user;
a tactile pin positioned within the display and adapted to be driven upwardly and downwardly to generate refreshable Braille characters;
an actuator mechanism for driving the tactile pin;
the tactile pin including an upper extent adapted to be perceived by a user and a lower extent operatively connected to the actuator mechanism;
a beam formed between the upper and lower extents of the tactile pin, the beam adapted to buckle upon the application of excessive forces, the beam adapted to unbuckle after the excessive forces are removed;
the beam functioning to prevent damage to the tactile pin and the actuator mechanism.

3. The Braille display as described in Claim 2 wherein the length and the thickness of the beam are selected such that the tactile pin is positioned beneath a surface of the Braille display upon the application of excessive forces.

4. The Braille display as described in Claim 2 wherein the tactile pin is integrally molded from a plastic.

5. The Braille display as described in Claim 2 wherein the beam buckles towards a central axis upon the application of excessive forces.

6. The Braille display as described in Claim 2 wherein the beam buckles away from a central axis upon the application of excessive forces.

7. A pin for use in a refreshable Braille display, the pin comprising:
an upper extent adapted to be perceived by a user, with a series of pins being used to generate an individual Braille character;
an actuator mechanism selectively driving the tactile pin as needed to form the individual Braille character, the actuator mechanism positioned within a base;
overload protection means, the overload protection means preventing the pin from damaging the actuator mechanism upon the application of excessive forces to the Braille display.

8. The pin as described in Claim 7 wherein the overload protection means comprises an offset buckle spring interconnected between the pin and the base;

9. The pin as described in Claim 7 wherein the overload protection means comprises a plastic spring interconnected between the pin and the base.

10. The pin as described in Claim 7 wherein the overload protection means comprises a plastic beam extending between an upper and a lower extent of the pin.

11. The pin as described in Claim 7 wherein the overload protection means comprises a compressible elastomer that is formed at a lower extent of the pin.
